# EUROPÄISCHE PATENTSCHRIFT

(11) **EP 2 479 502 B1**
(45) Veröffentlichungstag und Bekanntmachung des Hinweises auf die Patenterteilung: **24.09.2014**
(21) Anmeldenummer: 11401010.1
(22) Anmeldetag: 24.01.2011
(51) Int. Cl.: E03C 1/00, F28D 1/047, F28D 21/00, F28D 1/06, F24D 11/00

(54) **Anlage und Verfahren zur energetischen Nutzung der in Abwassersammelbehältern und/oder Abwasserbehandlungsbehältern vorhandenen Medien**
Assembly and method for using medium in waste water collection containers and/or waste water treatment containers for energy
Installation et procédé d'utilisation énergétique de fluides disponibles dans des récipients de collecte d'eaux usées et/ou de récipients de traitement d'eaux usées

(43) Veröffentlichungstag der Anmeldung: 25.07.2012
(73) Patentinhaber: Enders, Torsten, 09496 Marienberg (DE); Schubert, Volker, 09496 Marienberg (DE); Bergmann, Martin, 09322 Penig (DE)
(72) Erfinder: Enders, Torsten, 09496 Marienberg (DE); Schubert, Volker, 09496 Marienberg (DE); Bergmann, Martin, 09322 Penig (DE)
(74) Vertreter: Thomas, Matthias

(56) Entgegenhaltungen:
- EP-A1- 0 040 303
- WO-A1-2009/123458
- DE-A1- 2 415 877
- DE-A1- 2 754 981
- DE-A1- 2 905 251
- DE-U1-202008 001 281
- FR-A1- 2 909 166
- FR-A1- 2 935 783
- US-A- 4 454 911

## Beschreibung

Die Erfindung betrifft eine Anlage und ein Verfahren zur energetischen Nutzung der in Abwassersammelbehältern und/oder Abwasserbehandlungsbehältern vorhandenen Medien, vor allem zur Nutzung der in den Medien enthaltenen Wärmeenergie und deren Verwendung.

Es ist bekannt, dass durch Abwässer in Industrie- und Wohnbereichen erhebliche Mengen an Verlustenergie entstehen. Dies dadurch, dass in erheblichem Umfang erwärmtes Brauchwasser ohne Rückgewinnung der darin enthaltenen Wärmeenergie fortgeleitet wird.

Ebenso ist bekannt, dass insbesondere in fäkalienbelasteten Abwässern biologische Prozesse ablaufen, durch die unter anderem nutzbare Wärmeenergie erzeugt wird.

Bekannt ist ferner, dass Abwässer aggressiv sein können und deshalb Wärmetauscher korrosiven Angriffen ausgesetzt sind.

Im Abwasser enthaltene Inhaltsstoffe führen zu organischen und/oder anorganischen Belägen und häufig zu einer Biofilmbildung, die Wärmeübergänge von den Medien zu herkömmlichen, in den Medien angeordneten, Wärmetauschern nachteilig beeinflussen können.

Deshalb bedarf es der Reinigung der so angeordneten Wärmetauscher in kurzen Zeiträumen.

Dieses Problem ist beispielsweise bei einem Heizsystem mit Abwasserwärmerückgewinnung gemäß dem Vorschlag aus FR 2 935 783 A1 vorhanden. Bei diesem Vorschlag zur Abwasserwärmerückgewinnung wird ein aufgeständerter Überlaufbehälter benutzt, der im Behälterinnenraum eine Wärmetauscherschlange enthält, die im direkten Kontakt mit dem Abwasser steht. Das Volumen des Überlaufbehälters ist im Vergleich mit dem Abwasserstrom gering, sodass ein häufiger Medienaustausch stattfindet. Eine Speicherung des Mediums fehlt, weshalb Wärme aus Abbauprozessen nicht gewonnen werden kann.

Um Verschmutzungen möglichst zu vermeiden und zugleich den Wärmeaustausch effektiv zu halten, wird eine Strömung erzeugt, die über zusätzliche Schwallwände mehrfach umgelenkt wird, um Turbulenzen zu erzeugen.

Ein sicherer Betrieb des oben beschriebenen Überlaufbehälters ist nur möglich, wenn eine Vorreinigung des Abwassers durchgeführt wurde und durch den Überlaufbehälter nur noch Grauwasser geleitet wird. Während einer solchen Vorreinigung treten allerdings bereits Wärmeverluste ein. Insgesamt ist die Wärmerückgewinnung in einem aufgeständerten Überlaufbehälter ineffektiv, weil in den erforderlichen Zu- und Ableitungen, in der Vorreinigungsstufe, durch die kurze Verweildauer und durch die überirdische Bauweise erhebliche Energieverluste entstehen.

Das gleiche Problem besteht bei einem in WO 2009/123458 enthaltenen Vorschlag, in einen Abwassersammelbehälter eine Wärmetauscherschlange dergestalt anzuordnen, dass sie von oben in das Medium hineinragt und direkten Kontakt mit dem Medium hat.

Korrosion und Reinigungsaufwand haben deshalb eine Nutzung der in Abwässern vorhandenen Wärmemengen weitgehend verhindert.

Die oben geschilderten Probleme berücksichtigend, ist in DE 24 15 877 A vorgeschlagen worden, einen Abwassersammelbehälter nach dem Überlaufprinzip so auszugestalten, dass in den eigentlichen Behälter ein Innenbehälter aus einem korrosionsfesten und wärmeleitenden Material, mithin ein Metallbehälter, eingesetzt und der verbleibende Zwischenraum mit Dämmstoff ausgefüllt wird. An der Wand des Innenbehälters sind außen Wärmetauscherrohre angeordnet.

Durch diese Bauweise entstehen enorme Errichtungskosten für Abwassersammelbehälter. Der aus Metallen zu fertigende Innenbehälter unterliegt korrosiven Belastungen, sodass teure korrosionsbeständige Legierungen bei der Herstellung des Behälters eingesetzt werden müssen.

Ein weiterer wesentlicher Nachteil bei der vorgeschlagenen Lösung besteht darin, dass mit Hilfe von Temperaturmessungen in Abwasserleitungen oder Abwasserkanälen erwärmte Mengen an Abwasser festgestellt werden sollen und über ein Wegeventil nur tatsächlich erwärmte Abwassermengen in den Abwasserbehälter umgeleitet werden sollen. So kann beispielsweise Energie aus Umsetzungsprozessen nur in geringem Maße, nämlich nur bei den tatsächlich eingefüllten Abwassermengen gewonnen werden. Wärmemengen in Abwässern unterhalb eingestellter Temperaturgrenzen werden weder erfasst noch zurückgewonnnen.

Mithin stehen Aufwand und Nutzen bei einer solchen Anlage in keinem Verhältnis zueinander.

Aus DE 29 05 251 A ist ein ähnlicher Vorschlag bekannt, wobei im Innenbehälter zu Reinigungszwecken zugleich noch ein Rührwerk angeordnet ist. Der die Wärmemengen aufnehmende Wärmetauscher ist ebenfalls im Zwischenraum zwischen Innenbehälter und Außenbehälter freitragend angeordnet.

Einerseits wird durch das integrierte Rührwerk für eine gleichmäßige Wärmeverteilung gesorgt. Andererseits besteht kein direkter Kontakt zwischen Innenbehälter und Wärmetauscher, wodurch erhebliche Übertragungsverluste entstehen.

Als Mittel zur Wärmeübertragung soll eine neutrale Wasserfüllung dienen, die im Zwischenraum zwischen Innenbehälter und Außenbehälter eingefüllt ist.

Die vorgeschlagene Anordnung soll ausschließlich zur Erwärmung von kaltem Nutzwasser dienen. Weitere Möglichkeiten der Nutzung gewonnener Wärmemengen sind nicht in Betracht gezogen.

Ein Vorschlag in FR 26 09 166 A1 betrifft eine analoge Lösung wie die oben beschriebene, wobei im Zwischenraum zwischen einem Innenbehälter und einem Außenbehälter ebenso ein flüssiges Medium als Wärmeübertrager vorhanden sein soll.

Ein wesentlicher Nachteil auch bei dieser Anlage ist, dass es sich lediglich um einen Durchlaufbehälter handelt, in dem über eine Temperaturkontrolleinrichtung dafür gesorgt wird, dass ausschließlich erwärmtes Abwasser zugeführt wird. Eine Rückgewinnung in möglichst umfassender Weise aus einer größeren ruhenden Abwassermenge ist nicht in Betracht gezogen.

Aus WO 2009/123458 A1 ist eine weitere Lösung bekannt, bei der ein Abwassersammelbehälter in seiner Wandung und im Boden Wärmetauscherrohre enthält, sodass auch in stehendem Abwasser und voraussichtlich aus der gesamten anfallenden Abwassermenge enthaltene Wärmemengen zurückgewonnen werden können. Ein Nachteil dieser Lösung besteht allerdings darin, dass die Gewinnung von Wärmemengen aus dem Gasvolumen des Abwassersammelbehälters nicht erfolgt.

Die Patentanmelder haben in DE 10 2008 026 240 B4 vorgeschlagen, in Kanälen, Tunnels oder Zugangsschächten zu denselben vorhandene Warmluft zur Energiegewinnung zu nutzen. Nach diesem erteilten Patent soll entweder im Bereich der Kanäle oder Tunnels über eine bestimmte Wegstrecke ein Lamellenwärmetauscher eingesetzt sein oder es soll in Zugangsschächten oder -stollen jeweils eine Wärmetauschereinheit angeordnet sein. Als Wärmequelle werden dabei geothermische und einem strömenden Medium innewohnende Wärmeenergie, die jeweils an die Kanalluft abgegeben werden, genutzt. Im Fall von Tunnels wird die im Tunnel durch Fahrzeuge freigesetzte und an die Umgebungsluft übertragene Wärmeenergie genutzt.

Es ist auch schon vorgeschlagen worden eine Wärmerückgewinnung aus der Kanalluft klein dimensionierter Abwasserleitungen, wie sie beispielsweise bei Wohngebäuden typisch sind, durchzuführen. Einen entsprechenden Vorschlag enthält DE 20 2008 001 281 U1. Dabei soll die Kanalluft über eine Anschlussleitung einem zusätzlich angeordneten Behälter zugeleitet werden, der mit Wärmetauschern, mehreren Schotten und einer Isolierung versehen ist und in dem der Prozess der Wärmerückgewinnung ausgeführt werden soll. Nach der Wärmerückgewinnung soll die Kanalluft dann über eine Abluftleitung ins Freie geleitet werden.

Nach diesem Vorschlag errichtete Anlagen sind ausgesprochen kostenaufwendig und rentieren sich demnach nur bei entsprechend großen zurück gewonnen Wärmemengen. Bei Abwässerkanälen kleinen Durchmessers stehen Wärmemengen im erforderlichen Umfang wegen darin herrschender hoher Fließgeschwindigkeiten überhaupt nicht zur Verfügung.

Ein weiteres Problem besteht durch das Erfordernis einer ständigen Strömung der Kanalluft und dem daraus folgenden Erfordernis, die Kanalluft nach dem Wärmerückgewinnungsprozess auch abzuleiten. Eine Rückführung in den Kanal kommt wegen des damit einhergehenden Aufwandes nicht in Betracht. Somit haben derartige Anlagen den Nachteil, dass sie geruchsbelastete Kanalluft ins Freie leiten und deshalb Vorkehrungen getroffen werden müssen, dass dies ohne Beeinträchtigung und Schädigung der Umwelt erfolgt.

Eine ähnlich arbeitende Anlage, die mit einer Wärmepumpe gekoppelt ist, ist in DE 26 26 468 A1 vorgeschlagen. Die oben dargelegten Nachteile bestehen auch bei dieser Anlage.

Die gleiche Problematik besteht bei einer Anlage gemäß dem Vorschlag in DE 31 39 564 A1.

Ebenso verhält es sich mit dem in DE 27 41 477 A1 auffindbaren Vorschlag, bei dem sogar ein Luftstrom erzeugt werden soll, der wiederum in die Atmosphäre abgeleitet wird.

Zudem besteht bei solchen Anlagen stets auch eine Rückstaugefahr.

Einem weiteren Vorschlag aus FR 2 935 783 A1 folgend soll es möglich sein, bei einem aufgeständerten Überlaufbehälter dessen Behälterwand mit einem Wärmetauscher und einer zusätzlichen isolierenden Ummantelung auszustatten. Dabei wird zwar ein Kontakt mit dem Abwasser vermieden, jedoch wird durch die notwendige Isolierung ein zusätzlicher anlagentechnischer Aufwand nötig, der die Kosten solcher Anlagen erheblich erhöht. Außerdem besteht zwischen der Rohrschlange des Wärmetauschers und dem Behälter nur eine Linienberührung, weshalb dieser Wärmetauscher ineffektiv arbeitet.

Da es sich bei einem solchen Überlaufbehälter um eine Einrichtung handelt, in der ein strömendes Medium durchgeleitet wird, können nur während der Verweildauer des Mediums Wärmemengen entzogen werden. Für den Entzug von bei biologischen Prozessen im Abwasser entstehender Wärme ist diese Einrichtung nicht geeignet.

Die aus dem Stand der Technik bekannten Anlagen, mit denen Wärme aus dem strömenden Grauwasser zurückgewonnen werden soll, verursachen einen erheblichen anlagentechnischen Aufwand. So müssen:
- ein zusätzlicher Anlagenaufwand für eine grobe Vorreinigung des Grauwassers in Kauf genommen werden;
- Wärmeverluste bereits bei der Vorreinigung und in den Abwasserleitungen zur und von der Einrichtung zur Wärmerückgewinnung sowie, falls es sich um eine überirdische Anlage handelt, auch in der Anlage selbst in Kauf genommen werden;
- ein erhöhter Steuerungsaufwand getrieben werden, da der Zustrom bzw. Ablauf des Grauwassers überwacht werden muss;
- eine zusätzliche Gefahr dafür, dass Havarien eintreten oder Schäden durch Ungeziefer entstehen, in Kauf genommen werden.

Weiterhin ist auch bei Anlagen, bei denen die Wärmerückgewinnung aus etwaiger Kanalluft erfolgt, ein erhöhter Aufwand notwendig. Es müssen:
- auch hier eine zusätzliche Anlage außerhalb des Leitungssystems der Abwasserleitungen errichtet werden,
- eine Zwangslüftung eingerichtet werden, durch die der Energieaufwand steigt und sich somit der Nutzeffekt der Anlage verringert;
- eine erhebliche Rückstaugefahr, Havarien oder Schäden durch Ungeziefer berücksichtigt werden.

Mithin besteht ein Bedarf, auch stehende Abwassermengen, in denen Wärmeenergie gespeichert ist und in denen weitere Wärmeenergie durch biologische Prozesse entstehen kann, für die Wärmerückgewinnung nutzbar zu machen. Ebenso kann ein Bedarf bestehen, durch Wärmezufuhr die biologischen Prozesse in solchen stehenden Abwassermengen zu beeinflussen.

Es ist deshalb Aufgabe der Erfindung, die aus dem Stand der Technik bekannten Anlagen so weiterzuentwickeln, dass mit einer Anlage und einem Verfahren zur energetischen Nutzung der in Abwassersammelbehältern und/oder Abwasserbehandlungsbehältern vorhandenen stehenden Medien Wärmeenergie im maximal möglichen Umfang entzogen oder auch Wärme zugeführt werden kann. Die Anlage und das Verfahren sollen dabei leicht und einfach herstellbar beziehungsweise durchführbar und vor allem auch in vorhandene Anlagen integrierbar sein.

Nach der Erfindung wird die Aufgabe durch eine Anlage nach den Merkmalen des Patentanspruches 1 gelöst. Ferner wird die Aufgabe für das Verfahren zur energetischen Nutzung der in Abwassersammelbehältern und/oder Abwasserbehandlungsbehältern vorhandenen Medien nach den Schritten entsprechend Patentanspruch 5, 6 oder 7 gelöst. Die Aufgabe der Erfindung wird auch durch die Verwendung nach Patentanspruch 8 gelöst. Neben- und nachgeordnete Patentansprüche betreffen Ausgestaltungsformen der Anlage und des Verfahrens und beschränken die Erfindung nicht.

In der nachstehenden Beschreibung, den Ausführungsbeispielen und den Patentansprüchen werden die verwendeten Begriffe mit dem nachstehend dargelegten Sinngehalt verwendet, wobei dieser auch Teil der Erfindung sein kann:
Abwassersammelbehälter — ist jeder Behälter, in dem Abwässer beliebiger Art zumindest zeitweise gesammelt werden.
Abwasserbehandlungsbehälter — ist jeder Behälter, in dem Abwässer beliebiger Art zumindest zeitweise durch verschiedene Verfahren aufbereitet beziehungsweise behandelt werden können.
Abwasser - ist ein mit zu entsorgenden oder zu behandelnden Begleitstoffen belastetes Wasser, wobei die Belastung sowohl lösliche als auch unlösliche Bestandteile, die vom Wasser lediglich transportiert werden, umfassen kann.
Hohlraum - ist ein Bereich im Abwassersammelbehälter oder im Abwasserbehandlungsbehälter, der nicht vom Abwasser ausgefüllt wird und der gewöhnlich belastete und nicht strömende Luft enthält.
Wärmetauscher — ist ein Bauelement oder eine Baueinheit, die im Hohlraum im Boden oder in der Seitenwand eines Abwassersammelbehälters oder eines Abwasserbehandlungsbehälters zum Zweck der Gewinnung oder der Zufuhr von Wärmemengen angeordnet ist.
Boden — ist der Boden eines Abwassersammelbehälters oder eines Abwasserbehandlungsbehälters.
Seitenwand — ist ein Seitenteil oder ein Mantel eines Abwassersammelbehälters oder eines Abwasserbehandlungsbehälters, das an der Behälterinnenseite mit Abwasser, einem Sediment oder Luft Kontakt hat.

Die Erfindung nutzt den Umstand, dass in Abwassersammelbehältern oder Abwasserbehandlungsbehältern zumeist größere Ansammlungen von Abwasser vorhanden sind, die beispielsweise auch durch Einleitungen aus mehreren Abwasserquellen gespeist sein können. Sie nutzt ferner die Möglichkeit, mit vergleichsweise geringem technischem Aufwand den stehenden Abwässern Wärmemengen zu entziehen.

Ein besonderer Vorteil der Anordnung ist, dass die für die Wärmerückgewinnung eingesetzten Wärmetauscher keinen Kontakt zum Abwasser haben, deshalb keine Reinigungsaufwendungen entstehen und darüber hinaus eine lange Brauchbarkeit der Wärmetauscher sichergestellt ist.

Nach der Erfindung wird in einem nicht vom Abwasser ausgefüllten Hohlraum des Abwassersammelbehälters oder eines Abwasserbehandlungsbehälters wenigstens ein Wärmetauscher angeordnet, der im Betrieb der Anlage keinen Kontakt mit dem Abwasser hat.

Der Wärmetauscher ist dabei im Hohlraum oberhalb des Flüssigkeitsspiegels des Abwassers angeordnet.

Abwassersammelbehälter oder Abwasserbehandlungsbehälter haben gewöhnlich einen, bei normaler Nutzung verschlossenen, Zugang, der mit einem Deckel verschlossen ist. Eine bevorzugte Ausführungsform der Erfindung benutzt diesen Zugang für die Anordnung eines Wärmetauschers.

Es ist weiterhin möglich, einen Wärmetauscher in die Seitenwand oder den Mantel des Abwassersammelbehälters zu integrieren. Dabei kommt es nicht darauf an, ob es sich um einen monolithisch vor Ort errichteten, einen vorgefertigten oder einen aus Betonteilen zusammengesetzten Abwassersammler handelt.

Eine weitere Ausführungsform sieht die Anordnung eines Wärmetauschers im Boden des Abwassersammelbehälters oder Abwasserbehandlungsbehälters vor. Auch hierbei kommt es nicht darauf an, welche Bauweise des Behälters praktiziert ist.

Grundsätzlich erfolgt die Rückgewinnung von Wärmemengen aus dem Abwasser durch Zuführen eines Betriebsmediums, das gegenüber der Temperatur des Abwassers ein niedrigeres Temperaturniveau hat und deshalb beim Durchströmen des Wärmetauschers erwärmt wird. Durch weitere, nicht beschriebene und aus dem Stand der Technik bekannte Mittel können diese Wärmemengen aus dem Betriebsmedium gewonnen und für andere Nutzungen bereitgestellt werden.

Das Verfahren zur energetischen Nutzung der im Abwassersammelbehälter oder Abwasserbehandlungsbehälter vorhandenen Medien beruht auf der Anwendung einer der oben beschriebenen Anordnungen, wobei die Wärmetauscher mit einem Betriebsmedium, das eine niedrigere Temperatur im Zulauf hat, beim Durchströmen des Wärmetauschers erwärmt wird und nachfolgend aus dem erwärmten Betriebsmedium die aufgenommenen Wärmemengen entzogen werden.

Das Verfahren ist so ausgestaltet, dass ein im Hohlraum eines Abwassersammelbehälters angeordneter Wärmetauscher zur Gewinnung von Wärmemengen genutzt wird.

Das Verfahren kann zusätzlich so ausgestaltet sein, dass ein in die Seitenwand eines Abwassersammelbehälters oder Abwasserbehandlungsbehälters integrierter Wärmetauscher zur Gewinnung von Wärmemengen eingesetzt wird.

Ebenso ist es möglich, einen in den Boden eines Abwassersammelbehälters oder Abwasserbehandlungsbehälters integrierten Wärmetauscher zur Gewinnung von Wärmemengen zu verwenden.

Es ist ein besonderer Vorteil der erfindungsgemäßen Anlagen und auch der in den Anlagen ausgeführten Verfahren zur Gewinnung von Wärmemengen, dass in die Anlagen nicht eingegriffen wird und sich damit deren Nutzungsbedingungen nicht ändern. Ein erwünschter hermetischer Abschluss bleibt erhalten. Die Strömungsverhältnisse im Abwassersammelbehälter oder im Abwasserbehandlungsbehälter werden nicht beeinflusst.

Anlage und Verfahren sind zugleich einsetzbar in abflusslosen Abwassersammelbehältern, vor allem in abflusslosen Jauchegruben.

Sie sind gleichfalls einsetzbar in biologischen Kläranlagen, vor allem in den so genannten Kleinkläranlagen.

Das Verfahren kann vorsehen, dass gezielt Wärmemengen entnommen werden, um gerade in biologischen Kläranlagen erforderliche Medientemperaturen in einem Solltemperaturbereich zu halten.

Das Verfahren kann deshalb auch vorsehen, erforderlichenfalls erwärmtes Betriebsmedium in die Wärmetauscher zu schicken, sollte der Solltemperaturbereich im Abwassersammelbehälter unterschritten sein.

Die erfindungsgemäße Anlage lässt sich bei der Errichtung von Abwassersammelbehältern oder Abwasserbehandlungsbehältern mit einbauen und verursacht dabei nur moderate Mehrkosten, die sich in kurzer Zeit amortisieren.

Nachrüstungen praktisch aller bestehenden Abwassersammelbehältersind möglich.

Die Erfindung wird nachstehend anhand von Ausführungsbeispielen und Zeichnungen näher erläutert. Dabei zeigen:
- Fig. 1 -: einen Halbschnitt einer so genannten Kleinkläranlage, wie sie üblicherweise aus Betonfertigteilen aufgebaut ist.
- Fig. 2 -: eine Darstellung der Bodenfläche der Kleinkläranlage, die teilweise aufgebrochen einen möglichen Verlauf der Wärmetauscherleitungen zeigt.

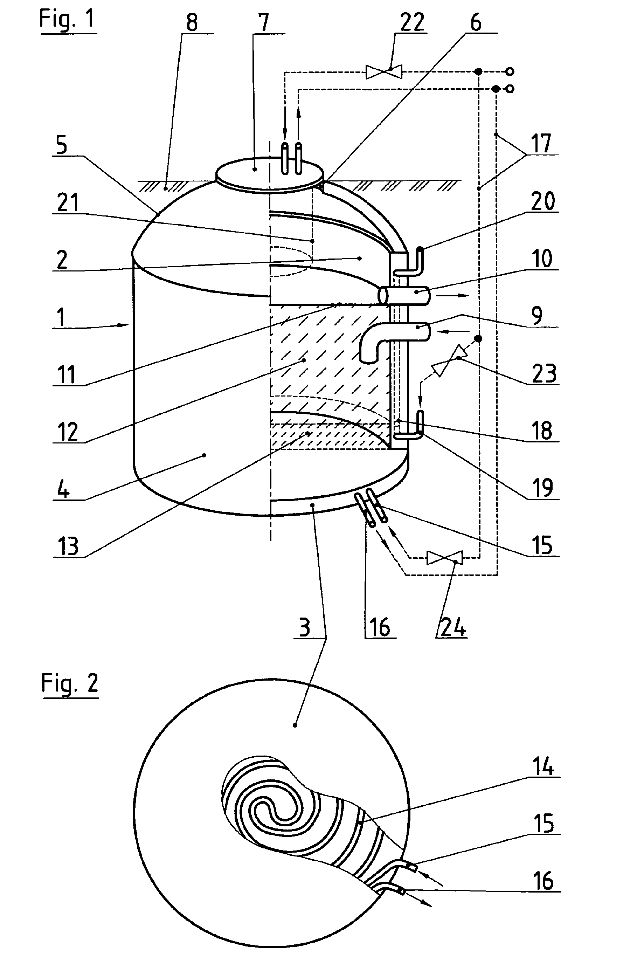

Ein Abwassersammelbehälter oder Abwasserbehandlungsbehälter **1,** wie in Fig. 1 gezeigt, gibt den grundsätzlichen Aufbau der erfindungsgemäßen Lösung wieder. Dabei ist aus Gründen der Übersichtlichkeit der Darstellung auf die Wiedergabe gewöhnlich vorhandener Mehrkammersysteme im Innenraum **2** des Abwassersammelbehälters oder Abwasserbehandlungsbehälters **1** verzichtet, da lediglich das Prinzip der Wärmerückgewinnung aufgezeigt werden soll.

Der erfindungsgemäße Abwassersammelbehälter oder Abwasserbehandlungsbehälter **1** ist aus einer Bodenplatte **3,** einem Mantel **4** und einer Kappe **5** aufgebaut. In der Kappe **5** ist eine Öffnung **6** vorhanden, die durch einen Deckel **7** geruchsdicht verschlossen ist. Der Abwassersammelbehälter oder Abwasserbehandlungsbehälter **1** ist gewöhnlich im Erdreich **8** versenkt eingebaut. Im Mantel **4** befindet sich eine Zuleitung **9** sowie ein Überlaufrohr **10,** das mit einem ableitenden Leitungssystem verbunden ist. Der Flüssigkeitsspiegel **11** entspricht gewöhnlich der Unterkante des Überlaufrohres **10,** da solche Abwassersammelbehälter oder Abwasserbehandlungsbehälter **1** nach dem Überlaufprinzip arbeiten.

Die Flüssigkeit **12** sowie ein sich aus der Flüssigkeit **12** absetzendes Sediment **13** haben in Gebieten mit gemäßigtem Klima gewöhnlich ein Temperaturniveau zwischen 4 °C und 20 °C. In wärmeren Klimazonen kann die obere Temperaturgrenze noch darüber liegen. Die Temperaturen ergeben sich durch die Zufuhr von Abwasser, gegebenenfalls durch Erdwärme aus umgebendem Erdreich und durch biologische Vorgänge im Abwassersammelbehälter oder Abwasserbehandlungsbehälter **1** selbst.

Im Boden **3** des Abwassersammelbehälters oder Abwasserbehandlungsbehälters **1** ist eine Wärmetauscherleitung **14** eingelegt, die im Boden versenkt angeordnet ist und vollständig vom Werkstoff des Bodens **3** umschlossen wird, sodass sie keine Kontakt mit dem Abwasser hat. Über ihre Anschlüsse **15** und **16** ist sie mit dem Leitungssystem **17** verbunden.

Alternativ zu der oben beschriebenen Anordnung oder ergänzend zu dieser kann im Mantel **4** ebenfalls eine Wärmetauscherleitung **18** angeordnet sein, die mit ihren Anschlüssen **19** und **20** gleichfalls mit dem Leitungssystem **17** verbunden ist.

Der Deckel **7** ist mit einem Wärmetauscher **21** versehen, der in den Innenraum **2** des Abwassersammelbehälters oder Abwasserbehandlungsbehälters **1** ragt und keinen Kontakt mit der Flüssigkeit **12** hat. Der Wärmetauscher **21** nutzt das Temperaturgleichgewicht im Abwassersammelbehälter oder Abwasserbehandlungsbehälter **1** der Gestalt, dass er der Luft im Innenraum **2** die Wärme entzieht, wobei diese wiederum durch Wärmeaustausch aus der Flüssigkeit **12** bis zum Ereichen eines Temperaturgleichgewichtes die benötigten Wärmemengen erhält.

Die Wärmetauscherleitung **14** im Boden **3** des Abwassersammelbehälters oder Abwasserbehandlungsbehälters **1** ist gewöhnlich einsträngig verlegt. Sie kann ebenso mehrsträngig verlegt sein.

Die bevorzugte Verlegungsweise ist spiralförmig, wobei auch andere Verlegungsformen, wie stern-, mäander- oder strahlenförmige Verläufe möglich sind. Letztlich ist die Gestaltung des Verlaufes eine Optimierungsaufgabe.

Im Mantel **4** verläuft die Wärmetauscherleitung **18** gewöhnlich als spiralförmiger Wickel.

Der Wärmetauscher **21** im Innenraum **2** kann auf beliebige Weise ausgeführt sein. Eine bevorzugte Ausführungsform ist dabei wegen ihres Wirkungsgrades ein Lamellenwärmetauscher.

Das Leitungssystem **17** kann Ventile **22, 23** oder **24** enthalten, die eine Steuerung der Wärmetauscher im Boden **3,** im Mantel **4** oder im Innenraum **2** erlauben.

Die Erfindung hat also den Vorteil, dass sie Anlagen und Verfahren vorschlägt, die die energetische Nutzung von Abwässern zulassen und dabei selbst eine Nachrüstung bestehender Abwassersammelbehälter ermöglichen.

### Bezugszeichenliste

- 1: Abwassersammelbehälter oder Abwasserbehandlungsbehälter
- 2: Innenraum
- 3: Bodenplatte
- 4: Mantel
- 5: Kappe
- 6: Öffnung
- 7: Deckel
- 8: Erdreich
- 9: Zuleitung
- 10: Überlaufrohr
- 11: Flüssigkeitsspiegel
- 12: Flüssigkeit
- 13: Sediment
- 14: Wärmetauscherleitung
- 15: Anschluss
- 16: Anschluss
- 17: Leitungssystem
- 18: Wärmetauscherleitung
- 19: Anschluss
- 20: Anschluss
- 21: Wärmetauscher
- 22: Ventil
- 23: Ventil
- 24: Ventil

## Patentansprüche

1. Anlage zur energetischen Nutzung der in Abwassersammelbehältern oder Abwasserbehandlungsbehältern (1) vorhandenen Medien,
mit einem Abwassersammelbehälter oder Abwasserbehandlungsbehälter (1)
wobei im Innenraum (2) derselben:
- Abwasser vorhanden ist, das einen Flüssigkeitsspiegel (11) ausbildet,
- ein oder mehrere Wärmetauscher (21) angeordnet sind,
wobei der oder die Wärmetauscher (21) zur thermischen Nutzung des Energieträgers Abwasser verwendbar sind,
**dadurch gekennzeichnet, dass**
der oder die Wärmetauscher (21) im nicht vom Abwasser ausgefüllten Hohlraum so angeordnet sind, dass sie im Betrieb der Anlage keinen Kontakt mit dem Abwasser haben.

2. Anlage zur energetischen Nutzung der in Abwassersammelbehältern oder Abwasserbehandlungsbehältern (1) vorhandenen Medien nach Patentanspruch 1,
**dadurch gekennzeichnet, dass**
im Boden des Abwassersammelbehälters oder Abwasserbehandlungsbehälters (1) eine oder mehrere Wärmetauscherleitungen (14) angeordnet sind.

3. Anlage zur energetischen Nutzung der in Abwassersammelbehältern oder Abwasserbehandlungsbehältern (1) vorhanden Medien nach Patentanspruch 1,
**dadurch gekennzeichnet, dass**
in wenigstens einer Seitenwand des Abwassersammelbehälters oder Abwasserbehandlungsbehälters (1) ein oder mehrere Wärmetauscherleitungen (18) angeordnet sind.

4. Anlage zur energetischen Nutzung der in Abwassersammelbehältern oder Abwasserbehandlungsbehältern (1) vorhandenen Medien nach einem der Patentansprüche 1 bis 3,
**dadurch gekennzeichnet, dass**
der Abwassersammelbehälter oder Abwasserbehandlungsbehälter (1) eine Kläranlage, eine Kleinkläranlage, ein Absetzbehälter, eine abflusslose Grube, ein Fettabscheider oder ein Ölabscheider ist.

5. Verfahren zur energetischen Nutzung von Medien in einer Anlage nach Patentanspruch 1,
**dadurch gekennzeichnet, dass**
der oder die im nicht vom Abwasser ausgefüllten Innenraum (2) angeordneten Wärmetauscher (21) mit einem Betriebsmedium beaufschlagt werden, dessen Betriebstemperatur unter der Temperatur der Luft im Abwassersammelbehälter oder Abwasserbehandlungsbehälter (1) liegt,
und das beim Durchströmen des oder der Wärmetauscher (21) Wärmeenergie aus der Luft im Abwassersammelbehälter oder Abwasserbehandlungsbehälter (1) aufnimmt.

6. Verfahren zur energetischen Nutzung von Medien in einer Anlage nach einem der Patentansprüche 2 bis 4,
**dadurch gekennzeichnet, dass**
die im Boden und/oder in der Seitenwand eines Abwassersammelbehälters oder eines Abwasserbehandlungsbehälters (1) angeordneten Wärmetauscherleitungen (14; 18) mit einem Medium beaufschlagt werden, dessen Ausgangstemperatur unter der Temperatur des Abwassers liegt.

7. Verfahren zur energetischen Nutzung von Medien in einer Anlage nach einem der Patentansprüche 2 oder 3,
**dadurch gekennzeichnet, dass**
die Wärmetauscherleitungen (14; 18) im Boden und/oder in der Seitenwand und/oder der oder die Wärmetauscher (21) im nicht vom Abwasser ausgefüllten Innenraum (2) eines Abwassersammelbehälters oder Abwasserbehandlungsbehälters (1) zur Wärmezufuhr genutzt werden.

8. Verwendung einer Anlage zur energetischen Nutzung der in Abwassersammelbehältern oder Abwasserbehandlungsbehältern (1) vorhandenen Medien nach einem der Patentansprüche 1 bis 4 mit einem Verfahren nach einem der Patentansprüche 5 bis 7, für eine Kläranlage, eine Kleinkläranlage, einen Absetzbehälter, eine abflusslose Jauchegrube, einen Fettabscheider oder einen Ölabscheider.

## Claims

1. A system for energy recovery of the media present in wastewater collecting tanks or wastewater treatment tanks (1),
with a wastewater collecting tank or wastewater treatment tank (1),
wherein the interior (2) of the latter:
- contains wastewater that forms a liquid level (11),
- accommodates one or more heat exchangers (21),
wherein the heat exchanger(s) (21) can be used for the thermal recovery of the wastewater energy carrier,
**characterized in that**
the heat exchanger(s) (21) is/are situated in the cavity not filled with wastewater in such a way as not to come into contact with the wastewater while the system is in operation.

2. The system for energy recovery of the media contained in wastewater collecting tanks or wastewater treatment tanks (1) according to claim 1,
**characterized in that**
one or more heat exchanger lines (14) are arranged in the bottom of the wastewater collecting tank or wastewater treatment tank (1).

3. The system for energy recovery of the media contained in wastewater collecting tanks or wastewater treatment tanks (1) according to claim 1,
**characterized in that**
one or more heat exchanger lines (18) are arranged in at least one lateral wall of the wastewater collecting tank or wastewater treatment tank (1).

4. The system for energy recovery of the media contained in wastewater collecting tanks or wastewater treatment tanks (1) according to one of claims 1 to 3,
**characterized in that**
the wastewater collecting tank or wastewater treatment tank (1) is a sewage treatment plant, small sewage treatment plant, settling tank, drainless cesspool, fat separator or oil separator.

5. A method for energy recovery of the media in a system according to claim 1,
**characterized in that**
the heat exchangers (21) arranged in the interior (2) filled or not filled with wastewater are exposed to an operating medium,
whose operating temperature lies below the temperature of the air in the wastewater collecting tank or wastewater treatment tank (1),
and which, as it streams through the heat exchanger(s) (21), absorbs thermal energy from the air in the wastewater collecting tank or wastewater treatment tank (1).

6. A method for energy recovery of the media in a system according to one of claims 2 to 4,
**characterized in that**
the heat exchanger lines (14; 18) arranged in the bottom and/or in the lateral wall of a wastewater collecting tank or wastewater treatment tank (1) are exposed to a medium, whose initial temperature lies below the temperature of the wastewater.

7. A method for energy recovery of the media in a system according to one of claims 2 or 3,
**characterized in that**
the heat exchanger lines (14; 18) in the bottom and/or lateral wall and/or the heat exchanges (21) in the interior (2) of a wastewater collecting tank or wastewater treatment tank (1) not filled with wastewater are used for heat supply.

8. Use of a system for energy recovery of the media present in wastewater collecting tanks or wastewater treatment tanks (1) according to one of claims 1 to 4 with a method according to one of claims 5 to 7 for a sewage treatment plant, small sewage treatment plant, settling tank, drainless cesspool, fat separator or oil separator.

## Revendications

1. Installation pour l'utilisation énergétique de fluides disponibles dans des récipients de collecte d'eaux usées ou des récipients de traitement d'eaux usées (1),
avec un récipient de collecte d'eaux usées ou un récipient de traitement d'eaux usées (1),
dans l'espace intérieur (2) desquels :
- se trouvent des eaux usées formant un niveau de liquide (11),
- sont installés un ou plusieurs échangeurs de chaleur (21),
dans laquelle le ou les échangeur(s) de chaleur (21) peuvent être utilisés pour l'utilisation thermique des eaux usées en tant que source d'énergie,
**caractérisée en ce que**
le ou les échangeur(s) de chaleur (21) sont installés dans l'espace vide non rempli d'eaux usées, de manière à ne pas être en contact avec les eaux usées pendant le fonctionnement de l'installation.

2. Installation pour l'exploitation énergétique de fluides contenus dans des réservoirs de collecte d'eaux usées ou des réservoirs de traitement d'eaux usées (1) selon la revendication 1,
**caractérisée en ce que**
une ou plusieurs conduites d'échangeur de chaleur (14) sont disposées dans le fond du récipient de collecte d'eaux usées ou du récipient de traitement d'eaux usées (1).

3. Installation pour l'exploitation énergétique de fluides contenus dans des réservoirs de collecte d'eaux usées ou des réservoirs de traitement d'eaux usées (1) selon la revendication 1,
**caractérisée en ce que**
une ou plusieurs conduites d'échangeur de chaleur (18) sont disposées dans au moins une paroi latérale du récipient de collecte d'eaux usées ou du récipient de traitement d'eaux usées (1).

4. Installation pour l'exploitation énergétique de fluides contenus dans des réservoirs de collecte d'eaux usées ou des réservoirs de traitement d'eaux usées (1) selon l'une des revendications 1 à 3,
**caractérisée en ce que**
le récipient de collecte d'eaux usées ou le récipient de traitement d'eaux usées (1) est une station d'épuration, une petite station d'épuration, un récipient de décantation, une fosse sans écoulement, un séparateur de graisse ou un séparateur d'huile.

5. Procédé pour l'utilisation énergétique de fluides dans une installation selon la revendication 1,
**caractérisé en ce que**
le ou les échangeurs de chaleur (21) disposés dans l'espace intérieur (2) non rempli d'eaux usées sont soumis à un fluide de fonctionnement,
dont la température de fonctionnement est inférieure à la température de l'air dans le récipient de collecte d'eaux usées ou le récipient de traitement d'eaux usées (1),
et lequel absorbe de l'énergie thermique lors du passage à travers le ou les échangeurs de chaleur (21), à partir de l'air dans le récipient de collecte d'eaux usées ou le récipient de traitement d'eaux usées (1).

6. Procédé pour l'utilisation énergétique de fluides dans une installation selon l'une des revendications 2 à 4,
**caractérisé en ce que**
des conduites d'échangeur de chaleur (14 ; 18) disposées dans le fond et/ou dans la paroi latérale d'un récipient de collecte d'eaux usées ou d'un récipient de traitement d'eaux usées (1) sont soumises à un fluide dont la température initiale est inférieure à la température des eaux usées.

7. Procédé pour l'utilisation énergétique de fluides selon l'une des revendications 2 ou 3,
**caractérisé en ce que**
les conduites d'échangeur de chaleur (14 ; 18) dans le fond et/ou la paroi latérale et/ou le ou les échangeurs de chaleur (21) dans l'espace intérieur (2) non rempli d'eaux usées d'un récipient de collecte d'eaux usées ou d'un récipient de traitement d'eaux usées (1) sont utilisées pour l'apport de chaleur.

8. Utilisation d'une installation pour l'utilisation énergétique des fluides disponibles dans des récipients de collecte d'eaux usées ou des récipients de traitement d'eaux usées (1) selon l'une des revendications 1 à 4, avec un procédé selon l'une des revendications 5 à 7, pour une station d'épuration, une petite station d'épuration, un récipient de décantation, une fosse à purin sans écoulement, un séparateur de graisse ou un séparateur d'huile.
